# EUROPÄISCHE PATENTANMELDUNG

(11) **EP 1 801 338 A2**
(43) Veröffentlichungstag der Anmeldung: **27.06.2007**
(21) Anmeldenummer: 06023044.8
(22) Anmeldetag: 06.11.2006
(51) Int. Cl.: E05F 15/10, E05F 15/16, F16D 1/10, H02K 7/116, H02K 11/00

(54) **Getriebemotor**

(30) Priorität: 23.12.2005 DE 202005020106 U
(71) Anmelder: Marantec Antriebs- und Steuerungstechnik GmbH & Co. KG., 33428 Marienfeld (DE)
(72) Erfinder: Hörmann, Michael, 33790 Halle/Westf. (DE)
(74) Vertreter: Laufhütte, Dieter

(57) **Zusammenfassung**

Die Erfindung betrifft einen Getriebemotor, vorzugsweise zum Antrieb eines Tores, mit einem Motor (10) und einem an diesen angeflanschten Getriebe (12) mit einer zentralen, durchgehenden Hohlwelle (16) und einer an die Profilform der Hohlwelle angepaßten, als Abtriebswelle dienenden Einsteckwelle (18).

## Beschreibung

Die Erfindung betrifft einen Getriebemotor bestehend aus einem Motor und einem an diesen angeflanschten Getriebe, wobei dieser Getriebemotor vorzugsweise zum Antrieb eines Verschlußelementes, wie beispielsweise eines Tores dient.

Insbesondere bei Garagentorantrieben ist es bekannt, den Motor mit einem angeflanschten Getriebe zu versehen. Eine aus dem Getriebe herausgeführte Antriebswelle trägt Abriebsmittel, beispielsweise ein Kettenrad, welche in einem Laufschienenprofil angeordnet sind und dort über eine Kette oder ein anderes Übertragungsmittel einen mit einem Verschlußmittel, das heißt beispielsweise dem Garagentor, verbundenen Schlitten bewegt. Je nach dem aufzusetzenden Abtriebsmittel müssen hier unterschiedliche Abtriebsachsen verwendet werden.

Aufgabe der vorliegenden Erfindung ist es, einen Getriebemotor der bekannten Art derart weiterzubilden, dass dieser mit dem Abtriebsmittel in einfacher Art und Weise verbunden werden kann.

Diese Aufgabe wird erfindungsgemäß durch die Merkmale des Anspruchs 1 gelöst. Demnach wird ein Getriebemotor mit einem Motor und einem an diesen angeflanschten Getriebe geschaffen, der eine zentrale, durchgehende Hohlwelle aufweist, in welche eine an die Profilform der Hohlwelle angepaßte, als Abtriebswelle dienende Einsteckwelle einsteckbar ist.

Erfindungsgemäß kann entsprechend dieser Lösung die Abtriebswelle ausschließlich im Antrieb gelagert werden. Das bedeutet, dass die Hohlwellenlagerung ohne externe Einflüsse bzw. Belastungen preiswert gestaltet werden kann.

Die einsetzbare Steckachse kann entsprechend dem jeweiligen Zielsystem, das heißt dem entsprechenden Abtriebsmittel, ausgewählt werden.

Bevorzugte Ausführungsformen der Erfindung ergeben sich aus den sich an den Hauptanspruch anschließenden Unteransprüchen. Demnach kann die Einsteckwelle über Sicherungsringe axial gesichert sein.

Die Hohlwelle kann vorzugsweise eine zahnradförmige Profilform aufweisen.

Ein über das Getriebe hinausstehender Überstand der Einsteckwelle kann als Drehgeber dienen.

Auf die Einsteckwelle als Abtriebswelle kann ein Abtriebmittel mit gleicher Profilform wie die Hohlwelle aufgesteckt werden. Bei einem derartigen Abtriebsmittel kann es sich um ein Kettenrad oder eine Zahnriemenscheibe handeln.

Das entsprechende Kettenrad bzw. die Zahnriemenscheibe kann in das Laufschienenprofil eingebaut sein. Zwar kann ein über das Getriebe hinausstehender Überstand der Einsteckwelle als Drehgeber dienen. In einer besonders vorteilhaften Ausgestaltung der Erfindung jedoch ist die Drehzahlaufnahmesensorik im Getriebegehäuse integriert. Hierzu ist ein Impulsrad und ein gehäusefester Sensor vorzusehen. Dabei kann das Impulsrad am die Hohlwelle antreibenden Schneckenrad befestigt sein.

Der erfindungsgemäße Getriebemotor benötigt keine axiale Führung in dem Antrieb.

Vorteilhaft kann bei einem symmetrischen Gehäuse und symmetrischen Anschraubpunkten eine Rechtsmontage genauso möglich sein wie eine Linksmontage. Je nach den Platzverhältnissen kann die Achse von links oder rechts in der Hohlwelle montiert sein. Somit ergibt sich ein Getriebemotor für beide Anwendungen.

Aufgrund der Tatsache, dass die Hohlwelle sich über die gesamte Breite des Getriebes erstreckt, und dass die als Abtriebswelle dienende Einsteckwelle daher beidseitig aus der Hohlwelle herausragt, ist eine Sensorik auf der dem Abtriebsmittel gegenüberliegenden Seite des Getriebegehäuses einbaubar. Bei dieser Sensorik kann es sich beispielsweise um die Drehzahlaufnahmesensorik handeln.

Durch die einfache Einsteckbarkeit der Abtriebswelle können auch mehrere Motoren über eine Welle zusammengeschaltet werden.

Weitere Merkmale, Einzelheiten und Vorteile der Erfindung werden anhand eines in der Zeichnung dargestellten Ausführungsbeispieles näher erläutert. Es zeigen:
- Figur 1:: verschiedene Ansichten eines teilweise dargestellten Getriebemotors gemäß einer ersten Ausführungsform der vorliegenden Erfindung,
- Figur 2:: eine alternative Ausgestaltung eines Getriebemotors gemäß Figur 2 und
- Figur 3:: eine dritte Ausführungsvariante eines erfindungsgemäßen Getriebemotors.

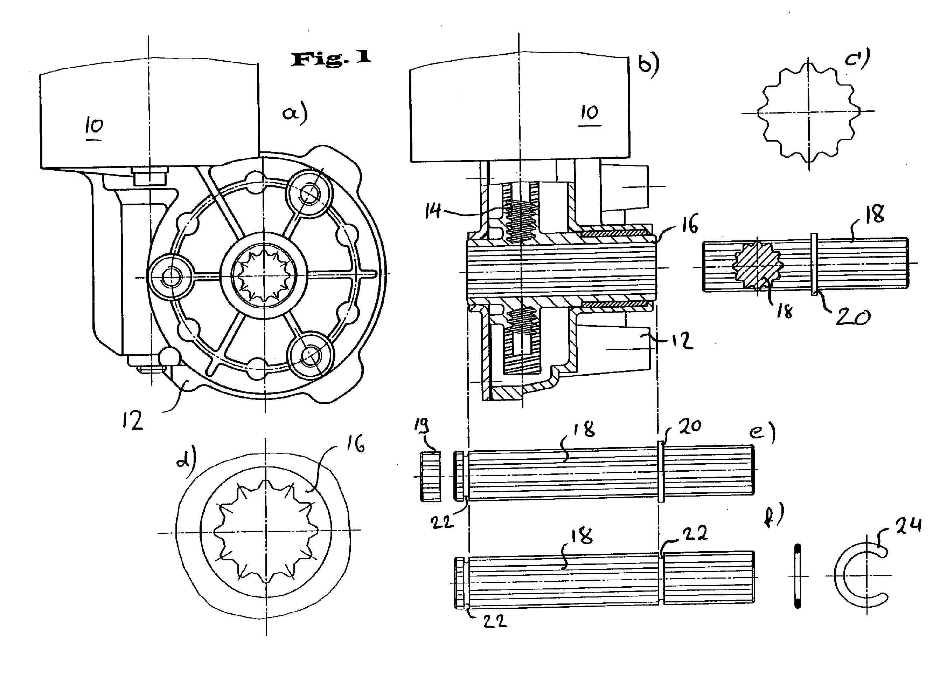

Entsprechend Figur 1 a ist eine Draufsicht auf einen Getriebemotor gemäß der ersten Ausführungsform der vorliegenden Erfindung gezeigt, wobei dieser aus einem Motor 10 und einem angeflanschten Getriebe 12 besteht. In der teilweise geschnittenen Seitendarstellung gemäß Figur 1b wird deutlich, dass der Motor 10 eine Schnecke 14 antreibt, die im Getriebe 12 mit einem hier nicht näher dargestellten Schneckenrad zusammenwirkt, um eine im Getriebe 12 integrierte und sich über die gesamte Breite des Getriebes erstreckende Hohlwelle 16 anzutreiben. Die Hohlwelle weist ein Hohlprofil auf, wie es in Draufsicht beispielsweise in Figur 1 c dargestellt ist. Die Form des Hohlprofils der Hohlwelle 16 ergibt sich auch aus der Draufsicht gemäß Figur 1d. In die Hohlwelle kann eine an die Profilform der Hohlwelle angepaßte als Abriebswelle dienende Einsteckwelle 18 eingesteckt werden. Diese Einsteckwelle hat, wie in der Figur 1b dargestellt, einen Querschnitt, der demjenigen eines Zahnrades ähnelt.

Als axiale Anlage ist auf der Einsteckwelle 18 ein Anschlag 20 gebildet, der hier durch einen in eine entsprechende Nut 22 greifenden Sicherheitsring 24 ausgebildet ist. Diese Ausführung ergibt sich aus den Einsteckwellen gemäß der Figur 1 e bzw. 1f. Die Einsteckwellen 18 können in unterschiedlicher Länge je nach Bedarf in die Hohlwelle 16 eingeschoben werden. So kann eine Verlängerung des überstehenden Teils der Einsteckwelle 18 beispielsweise als Drehzahlgeber für eine Drehzahlmessung verwendet werden. In der Figur 1 e ist alternativ eine entsprechend verlängerte Ausführung der Einsteckwelle 18 in dieser Darstellung mit 19 bezeichnet. Mit diesem verlängerten Überstand der Einsteckwelle kann ein hier nicht näher dargestellter Sensor zusammenwirken. Aufgrund der durchgehend ausgeführten Einsteckwelle 18 kann somit die Drehzahlsensorik auf der dem in Figur 1 nicht näher dargestellten Abtriebselement gegenüberliegenden Seite des Getriebes angeordnet werden.

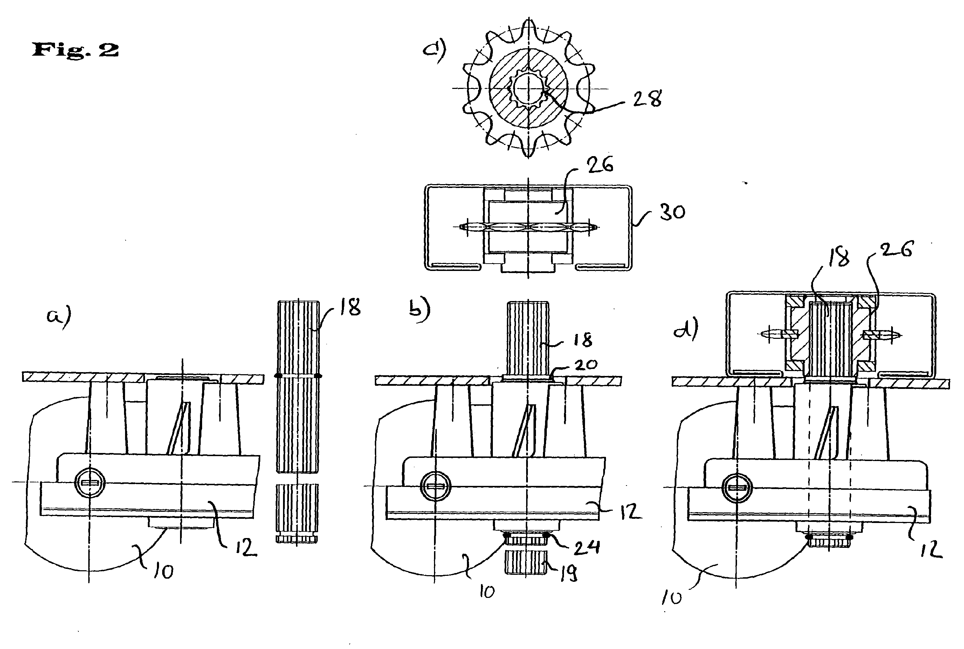

Im Ausführungsbeispiel gemäß Figur 2 ist gemäß Figur 2a der Motor 10 mit angeflanschtem Getriebe 12 getrennt von der Einsteckwelle 18 gezeigt. In der Darstellung gemäß Figur 2b ist die Einsteckwelle 18 bereits bis zu ihrem Anschlag 20 eingesteckt und über den Sicherungsring 24 auch auf der gegenüberliegenden Seite des Getriebes axial gesichert. In der Darstellung gemäß Figur 2b ist wiederum die längere Ausführung 19 der Einsteckwelle 18 dargestellt, da hier auch dieser Übersand 19 wieder als Drehzahlgeber verwendbar ist.

Explosionsartig auseinandergezogen ist in Figur 2b das Abtriebsmittel, nämlich im hier vorliegenden Fall das Kettenrad 26 dargestellt, das, wie in der entsprechenden Draufsicht gemäß Figur 2c gezeigt, eine innere Profilform 28 aufweist, die dem Profil der Hohlwelle 16 entspricht. Damit kann das Kettenrad problemlos auf die Einsteckwelle 18 aufgesteckt werden. Im hier dargestellten Ausführungsbeispiel ist das Kettenrad 28 in ein Laufschienenprofil 30 eines üblichen Garagentorantriebs mit einem in einer Laufschiene 30 hin und her verfahrbaren Schlitten gezeigt. In der Figur 2d ist das Kettenrad 26 auf der Einsteckwelle 18 montiert.

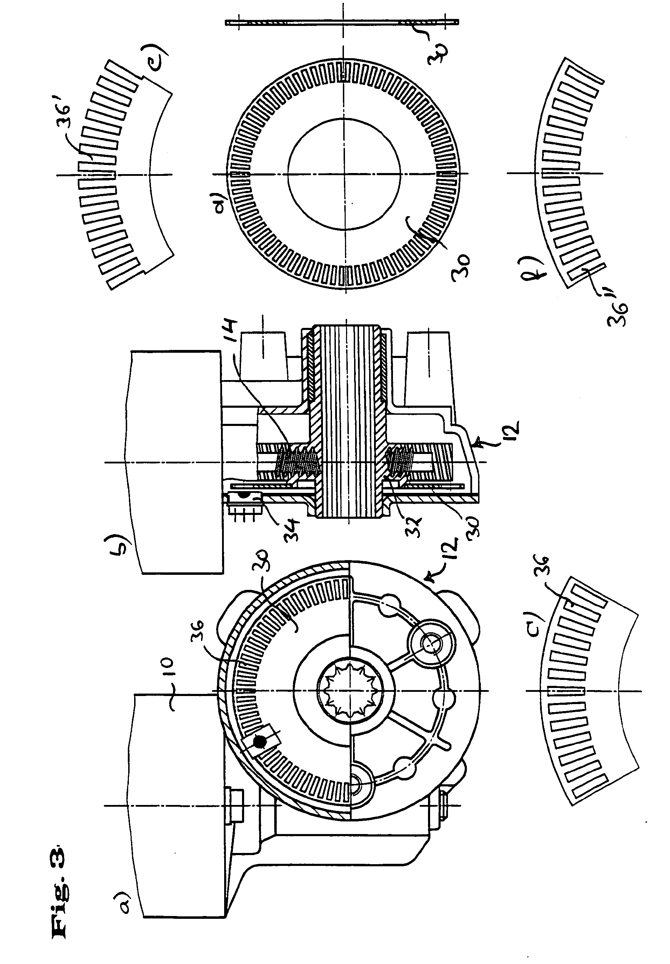

In der Figur 3 ist eine Abwandlung des Getriebemotors gezeigt. Hier ist innerhalb des Getriebegehäuses ein sogenanntes Impulsrad 30 angeordnet, das auf dem von der Schnecke 14 angetriebenen Schneckenrad 32 aufsteckbar sein kann. Das Impulsrad kann auch als umspritztes Einlegeteil in das Getriebeschneckenrad 32 integriert werden. Hierdurch hat jede Getriebeuntersetzung das genau passende Impulsrad 30. Im Gehäuse des Getriebes 12 ist an geeigneter Stelle ein Sensor 34 integriert. Dabei ist die Lage des Sensors 34 so gewählt, dass die die Impulse hervorrufenden Durchbrüche 36 des Impulsrades 30 an dem Sensor 34 vorbeigeführt werden.

In den unterschiedlichen Darstellungen gemäß Figur 3 sind unterschiedliche Ausbildungen des Impulsrades 30 gezeigt, wobei diese verschiedenen Ausbildungen gemäß der Figuren 3a, 3c und 3d sich entsprechen und jeweils schlitzförmige Öffnungen 36 enthalten. In den Darstellungen der Figuren 3e und 3f sind die die Impulse induzierenden Schlitze 36' bzw. 36" modifiziert. Wie anhand der Figur 3 dargestellt, ist für das Impulsrad 30 kein zusätzlicher Bauraum im Gehäuse des Getriebes 12 notwendig. Der Sensor 34 kann als recht kleines Teil ausgebildet werden. Es kann hier beispielsweise ein Hall-System oder ein Induktivsystem gewählt werden. Aufgrund ihres Aufbaus ist die Sensorik unabhängig von der gewählten Getriebeuntersetzung bzw. der Motordrehzahl. Durch die leichte Anpassung des Impulsrades an die Getriebedaten ist das Ausgangssignal des Sensors für alle Getriebeuntersetzungen und Motordrehzahlen identisch. Hierdurch kann die Steuerung leichter ausgewertet werden.

## Patentansprüche

1. Getriebemotor, vorzugsweise zum Antrieb eines Tores, mit einem Motor und einem an diesen angeflanschten Getriebe mit einer zentralen, durchgehenden Hohlwelle und einer an die Profilform der Hohlwelle angepaßten, als Abtriebswelle dienenden Einsteckwelle.

2. Vorrichtung nach dem vorhergehenden Anspruch, **dadurch gekennzeichnet, daß** die Einsteckwelle über Sicherungsringe axial gesichert sind.

3. Vorrichtung nach einem der vorhergehenden Ansprüche, **dadurch gekennzeichnet, daß** die Hohlwelle eine zahnradförmige Profilform aufweist.

4. Vorrichtung nach einem der vorhergehenden Ansprüche, **dadurch gekennzeichnet, daß** ein über das Getriebe hinausstehender Überstand der Einsteckwelle als Drehgeber dient.

5. Vorrichtung nach einem der vorhergehenden Ansprüche, **dadurch gekennzeichnet, daß** auf die Einsteckwelle als Abtriebswelle ein Abtriebsmittel mit gleicher Profilform wie die Hohlwelle aufgesteckt ist.

6. Vorrichtung nach dem vorhergehenden Anspruch, **dadurch gekennzeichnet, daß** das Abtriebsmittel ein Kettenrad oder eine Zahnriemenscheibe ist.

7. Vorrichtung nach dem vorhergehenden Anspruch, **dadurch gekennzeichnet, daß** das Kettenrad bzw. die Zahnriemenscheibe in das Laufschienenprofil eingebaut sind.

8. Vorrichtung nach einem der vorhergehenden Ansprüche, **dadurch gekennzeichnet, daß** eine ein Impulsrad und einen Sensor aufweisende Drehzahlaufnahmesensorik im Getriebegehäuse integriert ist.

9. Vorrichtung nach dem vorhergehenden Anspruch, **dadurch gekennzeichnet, daß** das Impulsrad am die Hohlwelle antreibenden Schneckenrad befestigt ist.
